# EUROPÄISCHE PATENTANMELDUNG

(11) **EP 2 336 578 A1**
(43) Veröffentlichungstag der Anmeldung: **22.06.2011**
(21) Anmeldenummer: 10192914.9
(22) Anmeldetag: 29.11.2010
(51) Int. Cl.: F16B 2/24, F16B 5/06, F16B 21/08

(54) **Befestigungsvorrichtung für Anbauteile an Montageschienen**

(30) Priorität: 17.12.2009 DE 102009054861
(71) Anmelder: HILTI Aktiengesellschaft, 9494 Schaan (LI)
(72) Erfinder: Ostermeier, Peter, 86911, Diessen (DE); Burtscher, Norbert, 6712, Thüringen (AT); Hermann, Fritz, 86899, Landsberg (DE)

(57) **Zusammenfassung**

Bei einer Vorrichtung (1) zum Befestigen eines Anbauteiles (3, 4) an einem Trägerteil (5), umfassend wenigstens ein Hintergreifteil (8) zum Einführen in eine Öffnung (10) des Trägerteils (5) und zum Hintergreifen wenigstens eines Randes (9) des Trägerteiles (5) mit wenigstens einem bewegbaren Halteelement (16), welches oder welche beim Einführen in die Öffnung (10) aufgrund eines Kontaktes zwischen dem wenigstens einen Hintergreifteil (8) und dem Trägerteil (5) in eine Eingreifstellung und mittels einer Rückbewegung des wenigstens einen Halteelementes (16) nach dem Einführen in die Öffnung (10) in eine Hintergreifstellung bewegbar sind, so dass der wenigstens eine Rand (9) des Trägerteils (5) von dem wenigstens einen Halteelement (16) hintergreifbar ist für eine formschlüssige Verbindung zwischen dem wenigstens einen Halteelement (16) und dem Trägerteil (5), und wenigstens ein Mittel (12) zur Fixierung des Anbauteiles (3, 4) an der Vorrichtung (1), sollen Anbauteile (3, 4) an dem Trägerteil (5) ohne Werkzeuge mit einem einfachen technischen Aufbau mittels der Vorrichtung (1) befestigt werden können. Diese Aufgabe wird dadurch gelöst, dass das wenigstens eine Halteelement (16) in der Hintergreifstellung vollständig in einem von dem Trägerteil (5) eingeschlossenen Innenraum (17) angeordnet ist.

## Beschreibung

Die vorliegende Erfindung betrifft eine Vorrichtung zum Befestigen eines Anbauteiles an einem Trägerteil gemäß dem Oberbegriff des Anspruches 1 und ein System zum Befestigen eines Anbauteiles an einem Trägerteil gemäß dem Oberbegriff des Anspruches 11.

In der Bautechnik werden Vorrichtungen zum Befestigen eines Anbauteils an einem Trägerteil verwendet, um Anbauteile an einem Trägerteil zu befestigen. Als Anbauteile kommen beispielsweise Fotovoltaik-Module, Fassadenelemente oder Leitungen als Bestandteil einer Wasserheizungs-oder Elektroinstallation in Betracht. Als Trägerteile werden im Allgemeinen Trag- oder Montageschienen verwendet.

Die DE 103 13 564 A1 zeigt ein Verbindungselement für Bauteile. Die Bauteile sind mit länglichen Ausnehmungen versehen, die zur Aufnahme des Verbindungselementes miteinander ausgerichtet werden, wobei das Verbindungselement als einteiliger Federclip ausgebildet ist, der diametral abstehende Federarme aufweist, deren Breite zum Einführen in die länglichen Ausnehmungen ausgelegt ist, wobei den freien Enden der Federarme in einem axialen Abstand jeweils ein Widerlagerabschnitt gegenüberliegt, der an dem Federclip angeformt ist und einen Eingriffabschnitt für ein Montagewerkzeug aufweist.

Aus der DE 10 2006 011 836 B3 ist ein Befestigungselement mit einer Grundplatte bekannt. Von der Grundplatte erstrecken sich gegenüberliegend erste Arme, die jeweils einen ersten Anlageabschnitt mit einem ersten Abstand zur Grundplatte aufweisen und wenigstens zwei sich gegenüberliegende zweite Arme, die einen zweiten Anlageabschnitt mit einem zweiten Abstand zur Grundplatte aufweisen. Die ersten Arme weisen dabei Betätigungsabschnitte auf, welche jeweils als eine Öse aufweisende Fläche ausgebildet sind.

Die DE 10 2007 042 484 B3 zeigt eine Vorrichtung zum Befestigen eines Anbauteils an einem Trägerteil mit einem zur Auflage an dem Anbauteil oder dem Trägerteil bestimmten Kopfteil, das über seitlich überstehende Auflageabschnitte verfügt. Eine federnde Vorderwandanordnung weist zwei Sperrflügel auf, die in etwa rechtwinklig zu der Vorderwand ausgerichtet sind. Die Sperrflügel weisen Raststufen auf, welche in einer Hintergreifstellung der Vorrichtung an dem Trägerteil aufliegen.

Die Aufgabe der vorliegenden Erfindung besteht darin, eine Vorrichtung und ein System zur Verfügung zu stellen, bei dem Anbauteile an einem Trägerteil ohne Werkzeuge mit einem einfachen technischen Aufbau mittels der Vorrichtung und dem System befestigt werden können. Des Weiteren soll die Vorrichtung und das System in der Herstellung preiswert sein und eine einfache und zuverlässige Handhabung ermöglichen.

Diese Aufgabe wird gelöst mit einer Vorrichtung zum Befestigen eines Anbauteiles an einem Trägerteil, umfassend wenigstens ein Hintergreifteil zum Einführen in eine Öffnung des Trägerteils und zum Hintergreifen wenigstens eines Randes des Trägerteiles mit wenigstens einem bewegbaren Halteelement, welches oder welche beim Einführen in die Öffnung aufgrund eines Kontaktes zwischen dem wenigstens einen Hintergreifteil und dem Trägerteil in eine Eingreifstellung bewegbar ist zum Einführen in die Öffnung und mittels einer Rückbewegung des wenigstens einen Halteelementes nach dem Einführen in die Öffnung in eine Hintergreifstellung bewegbar ist, so dass der wenigstens eine Rand des Trägerteils von dem wenigstens einen Halteelement hintergreifbar ist für eine formschlüssige Verbindung zwischen dem wenigstens einen Halteelement und dem Trägerteil, weiterhin umfassend wenigstens ein Mittel zur Fixierung des Anbauteiles an der Vorrichtung, wobei das wenigstens eine Halteelement in der Hintergreifstellung vollständig in einem von dem Trägerteil eingeschlossenen Innenraum angeordnet ist. Die Vorrichtung verfügt damit in vorteilhafter Weise über einen kompakten und einfachen Aufbau, weil das wenigstens eine Halteelement als bewegbare Komponente der Vorrichtung wenig Bauraum einnimmt und eine zuverlässige Verbindung zwischen der Vorrichtung und dem Trägerteil einfach gewährleistet ist.

Insbesondere umfasst das wenigstens eine Hintergreifteil wenigstens zwei Halteelemente und/oder das wenigstens eine Halteelement liegt in der Hintergreifstellung, insbesondere ausschließlich, an einer Breitseitenfläche und/oder an einer Schmalseitenfläche des wenigstens einen Halteelementes an und/oder je zwei Halteelemente sind gegenüberliegend angeordnet.

In einer weiteren Ausgestaltung ist die Vorrichtung mittels eines Schnapp- und/oder Einrastmechanismus an dem Trägerteil befestigbar.

Zweckmäßig ist das wenigstens eine Halteelement Bestandteil des wenigstens einen Hintergreifteiles.

In einer ergänzenden Ausgestaltung ist das wenigstens eine bewegbare Halteelement in einer Vormontagestellung nicht vorgespannt. Die Vormontagestellung des wenigstens einen bewegbaren Halteelementes liegt vor, wenn die Vorrichtung nicht an dem Trägerteil montiert ist und sich das wenigstens eine Halteelement nicht in der Einführstellung und/oder der Hintergreifstellung befindet.

Vorzugsweise ist das wenigstens eine Halteelement, insbesondere ausschließlich, im Wesentlichen platten- oder scheibenförmig ausgebildet. Das wenigstens eine Halteelement ist damit einfach und preiswert in der Herstellung und ermöglicht eine zuverlässige formschlüssige Verbindung zwischen der Vorrichtung und dem Trägerteil.

In einer weiteren Ausgestaltung umfasst das wenigstens eine Mittel eine Trägerplatte zur, vorzugsweise unmittelbaren, Fixierung der Vorrichtung an dem Anbauteil.

In einer weiteren Ausgestaltung umfasst das wenigstens eine Mittel eine Klebe-, Rast-, Niet- und/oder Schraubverbindung zur Fixierung des Anbauteiles an der Vorrichtung, insbesondere der Trägerplatte.

In einer ergänzenden Ausführungsform umfasst die Vorrichtung wenigstens ein Eingreifteil zum Einführen in die Öffnung des Trägerteils.

Vorzugsweise ist die Geometrie des wenigstens einen Eingreifteiles dahingehend an die Geometrie der Öffnung des Trägerteils angepasst, dass das wenigstens eine Eingreifteil wenigstens teilweise in die Öffnung einführbar ist.

In einer Variante weist das wenigstens eine Eingreifteil einen, vorzugsweise keilförmigen, Vorsprung zur Einführung in die Öffnung auf.

In einer ergänzenden Ausgestaltung ist das wenigstens eine Eingreifteil außerhalb des Vorsprunges im Wesentlichen scheiben- oder plattenförmig ausgebildet.

Zweckmäßig ist das wenigstens eine Eingreifteil zwischen dem wenigstens einen Hintergreifteil und der Trägerplatte angeordnet. Das wenigstens eine Hintergreifteil ist damit mittelbar mittels des wenigstens einen Eingreifteiles an der Trägerplatte angeordnet bzw. befestigt.

In einer weiteren Ausgestaltung sind die Trägerplatte und/oder das wenigstens eine Eingreifteil und/oder das wenigstens eine Hintergreifteil einteilig oder mehrteilig ausgebildet.

Insbesondere ist das wenigstens eine Halteelement um eine Drehachse verschwenkbar und/oder von dem wenigstens einen Halteelement ist aufgrund einer Lagerung eine Translationsbewegung ausführbar und/oder das wenigstens eine Halteelement ist bewegbar und rückbewegbar, da das wenigstens eine Halteelement selbst elastisch verformbar ist und/oder das wenigstens eine Halteelement mittels wenigstens eines separaten elastischen Elementes, insbesondere einer Feder, elastisch verformbar ist.

In einer ergänzenden Ausgestaltung besteht die Vorrichtung wenigstens teilweise, insbesondere vollständig, aus Kunststoff oder Metall, beispielsweise Aluminium oder Stahl.

Erfindungsgemäßes System zum Befestigen eines Anbauteiles an einem Trägerteil, umfassend eine Vorrichtung zum Befestigen des Anbauteiles an dem Trägerteil, umfassend wenigstens ein Hintergreifteil zum Einführen in eine Öffnung des Trägerteiles und zum Hintergreifen wenigstens eines Randes des Trägerteiles mit wenigstens einem bewegbaren Halteelement, welches oder welche beim Einführen in die Öffnung aufgrund eines Kontaktes zwischen dem wenigstens einen Hintergreifteil und dem Trägerteil in eine Eingreifstellung bewegbar ist zum Einführen in die Öffnung und mittels einer Rückbewegung des wenigstens einen Halteelementes nach dem Einführen in die Öffnung in eine Hintergreifstellung bewegbar ist, so dass der wenigstens eine Rand des Trägerteils von dem wenigstens einen Halteelement hintergreifbar ist für eine formschlüssige Verbindung zwischen dem wenigstens einen Halteelement und dem Trägerteil, weiterhin umfassend wenigstens ein Mittel zur Fixierung des Anbauteiles an der Vorrichtung, weiterhin umfassend das Trägerteil, wobei die Vorrichtung als eine in dieser Schutzrechtsanmeldung beschriebene Vorrichtung ausgebildet ist.

In einer weiteren Ausgestaltung ist das Trägerteil eine Tragschiene und/oder die Öffnung ist vorzugsweise eine Nut und/oder die Öffnung mündet in einen von einer Innenkontur des Trägerteils begrenzten Innenraum, so dass der wenigstens eine Rand zum Hintergreifen mit dem wenigstens einen Haltelement von der Innenkontur des Trägerteils gebildet ist.

In einer ergänzenden Ausgestaltung ist die Öffnung eine Montageöffnung zur Befestigung der Vorrichtung an dem Trägerteil.

In einer ergänzenden Variante sind zwei gegenüberliegende Halteelemente bei einer Befestigung der Vorrichtung an dem Trägerteil bezüglich einer durch eine zentrische Schienenlängsachse der Tragschiene verlaufenden Ebene dahingehend ausgerichtet, dass die Ebene durch die beiden Halteelemente verläuft und die Ebene von der zentrischen Schienenlängsachse in eine erste Teilebene und eine zweite Teilebene unterteilt ist und ein erstes Halteelement von der ersten Teilebene geschnitten ist und ein zweites Halteelemente von der zweiten Teilebene geschnitten ist. Die zentrische Schienenlängsachse ist in Richtung der größten Ausdehnung der Tragschiene ausgerichtet und verläuft durch einen Mittelpunkt oder einen Schwerpunkt der Tragschiene.

In einer weiteren Variante sind die wenigstens zwei Halteelemente um eine Drehachse im Wesentlichen parallel, d. h. mit einer Abweichung von weniger als 10°, insbesondere weniger als 5°, zu der Schienenlängsachse verschwenkbar oder die Drehachse ist in einem, vorzugsweise im Wesentlichen rechten, Winkel zu der Schienenlängsachse ausgerichtet und/oder der Abstand von Enden zweier gegenüberliegender Halteelemente ist in einer Abstandsrichtung vor dem Einführen in die Öffnung größer als eine lichte Breite der Öffnung in der Abstandsrichtung, so dass beim Einführen der zwei gegenüberliegenden Haltelemente die Halteelemente wegen eines Kontaktes mit dem Trägerteil bewegbar sind, insbesondere dahingehend, dass der maximale Abstand verkleinert wird.

In einer weiteren Ausgestaltung ist bei einer Befestigung der Vorrichtung an dem Trägerteil das wenigstens eine Halteelement in der Hintergreifstellung an dem Trägerteil vorgespannt und/oder die Befestigung der Vorrichtung an dem Trägerteil ist eine unlösbare Verbindung.

Im Nachfolgenden werden Ausführungsbeispiele der Erfindung unter Bezugnahme auf die beigefügten Zeichnungen näher beschrieben. Es zeigt:
- Fig. 1: einen Querschnitt eines System zum Befestigen eines Anbauteiles in einer Explosionsdarstellung,
- Fig. 2: eine perspektivische Ansicht eines Eingreifteiles mit einem Hintergreifteil,
- Fig. 3: eine perspektivische Ansicht des Hintergreifteiles in einem ersten Ausführungsbeispiel,
- Fig.4: eine perspektivische Ansicht von Hintergreifteilen als Modulanordnung in einem zweiten Ausführungsbeispiel,
- Fig. 5: eine perspektivische Ansicht mehrerer Hintergreifteile in einem dritten Ausführungsbeispiel,
- Fig. 6: einen Querschnitt des System zum Befestigen des Anbauteiles in einem Vormontagezustand,
- Fig. 7: einen Querschnitt des System gemäß Fig. 6 beim Einführen der Vorrichtung in eine Öffnung des Trägerteiles,
- Fig. 8: einen Querschnitt des System gemäß Fig. 6 in einem Endmontagezustand,
- Fig.9: einen Querschnitt einer Vorrichtung in einem ersten Ausführungsbeispiel,
- Fig. 10: eine perspektivische Ansicht der Vorrichtung in einem zweiten Ausführungsbeispiel,
- Fig. 11: eine perspektivische Ansicht des Hintergreifteiles in einem zweiten Ausführungsbeispiel und
- Fig. 12: eine Detailansicht des Systems mit dem Hintergreifteil gemäß Fig. 11 in dem Endmontagezustand.

In der Bautechnik bzw. im Bauwesen werden Vorrichtungen 1 zum Befestigen eines Anbauteiles 3 an einem Trägerteil 5 genutzt. Das Anbauteil 3 ist dabei beispielsweise ein Fotovoltaik-Modul 4, ein Fassadenelement oder eine Leitung (nicht dargestellt) und das Trägerteil 5 eine Tragschiene 6 oder eine Montageschiene 7. Mit der Vorrichtung 1 kann damit mittelbar das Anbauteil 3 an dem Trägerteil 5 befestigt werden.

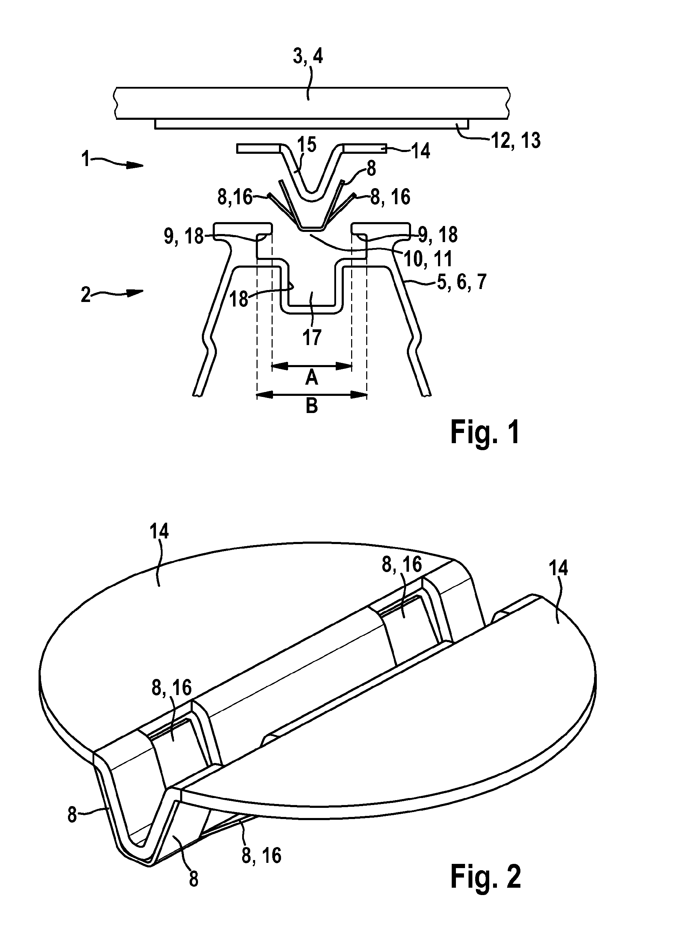

Die Vorrichtung 1 umfasst dabei eine Trägerplatte 13 als Mittel 12 zur Fixierung des Anbauteiles 3 an der Vorrichtung 1, ein Eingreifteil 14 mit einem Vorsprung 15 und ein Hintergreifteil 8 mit bewegbarem Halteelement 16 (Fig. 1, 2, 6, 7 und 8). Die Trägerplatte 13, das Eingreifteil 14 und das Hintergreifteil 8 sind dabei aus Metall, beispielsweise Stahl oder Aluminium, gefertigt und insbesondere stoffschlüssig, beispielsweise mittels Kleben oder Schweißen, oder formschlüssig, beispielsweise mit nicht dargestellten Schrauben oder Nieten zur Herstellung einer Schraub- oder Nietverbindung, miteinander verbunden (nicht dargestellt). In analoger Weise ist das Anbauteil 3 an der Trägerplatte 13 befestigt. Das Eingreifteil 14 ist dabei außerhalb des Vorsprunges 15 im Wesentlichen scheiben- oder plattenförmig (Fig. 2) ausgebildet. Dadurch kann das Eingreifteil 14 leicht mit dem scheiben- oder plattenförmigen Trägerplatte 13 verbunden werden.

Die Montageschiene 7 weist eine Öffnung 10 als Montageöffnung auf, die als Nut 11 ausgebildet ist. Die Nut 11 erstreckt sich dabei mit ihrer größeren Ausdehnung in Richtung einer Schienenlängsachse 19. Die Montageschiene 7 umschließt dabei mit einer Innenkontur 18 einen Innenraum 17, in welchen die Öffnung 10 mündet. Eine lichte Breite A der Öffnung 10 ist dabei in einer Ausrichtung senkrecht zu der Zeichenebene von Fig. 1, 6, 7 oder 8 kleiner als eine lichte Breite B des Innenraumes 17 im Anschluss an die Öffnung 10. Die ebenfalls aus Metall, beispielsweise Aluminium oder Stahl, oder Kunststoff bestehende Montageschiene 7 bildet dabei zusammen mit der Vorrichtung 1 ein System 2 zum Befestigen des Anbauteiles 3 mit dem Trägerteil 5.

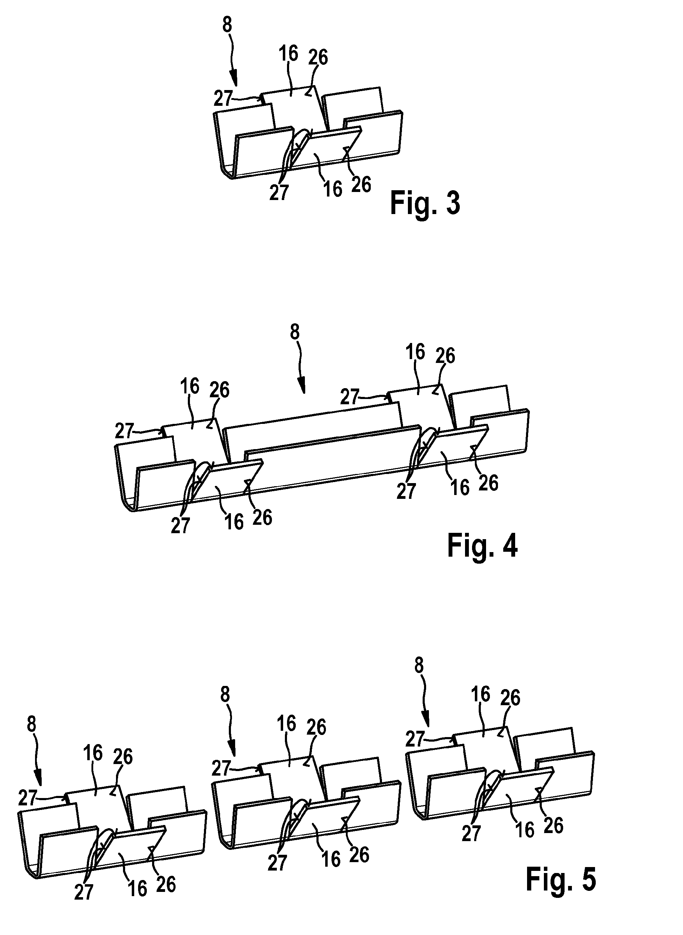

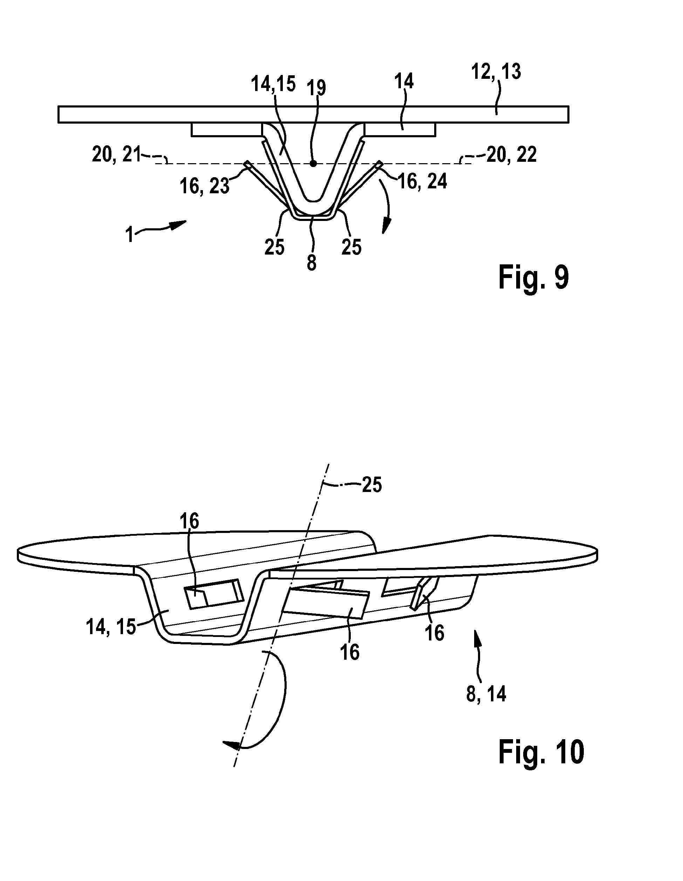

Das Hintergreifteil 8 weist um eine Drehachse 25 verschwenkbare Halteelemente 16 auf (Fig. 1 bis 10). Das Hintergreifteil 8 kann dabei einteilig mit zwei Halteelementen 16 (Fig. 3), einteilig mit mehr als zwei Halteelementen 16, beispielsweise vier Halteelementen 16 (Fig. 4) ausgebildet sein oder mehrteilig modular mit mehreren, beispielsweise drei Hintergreifteilen 8, ausgebildet sein (Fig. 5). Die Drehachse 25 des Halteelementes 16 kann dabei entweder parallel zu der Schienenlängsachse 19 ausgerichtet sein gemäß der Ausführungsform in Fig. 9 oder die Drehachse 25 kann in einem Winkel, z. B. rechten Winkel, ausgerichtet sein. In Fig. 10 sind das Eingreifteil 14 und das Hintergreifteil 8 als ein Teil ausgebildet. In dem in Fig. 9 dargestellten Ausführungsbeispiel der Vorrichtung 1 sind zwei Halteelemente 16 gegenüberliegend bezüglich der zentrischen Schienenlängsachse 19 ausgerichtet. Eine Ebene 20, welche durch die Schienenlängsachse 19 geht und welche die beiden Halteelemente 16 schneidet, ist dabei von der Schienenlängsachse 19 in eine erste Teilebene 21 und eine zweite Teilebene 22 unterteilt. Die erste Teilebene 21 schneidet dabei das erste Halteelement 23 und die zweite Teilebene 22 schneidet das zweite Halteelement 24. Die im Wesentlichen scheiben- oder plattenförmigen Halteelemente 16 weisen zwei Breitflächenseiten 26 und drei Schmalseitenflächen 27 auf (Fig. 3).

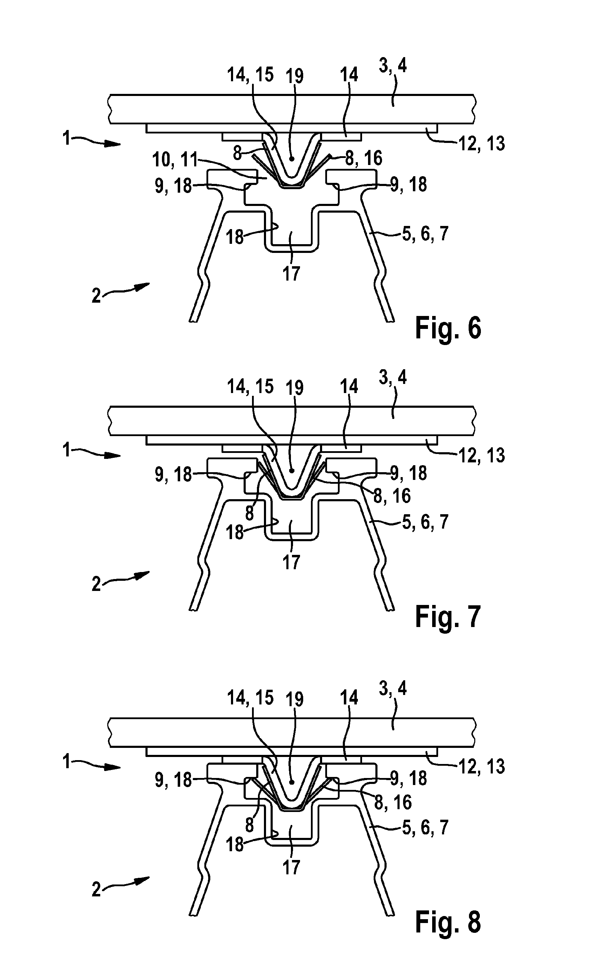

In den Fig. 6 bis 8 ist die Montageabfolge, d. h. die Befestigung der Vorrichtung 1 an der Montageschiene 7, dargestellt. In Fig. 6 ist ein Vormontagezustand dargestellt, in welchem sich die Halteelemente 16 in einer Vormontagestellung befinden und das Anbauteil 3 mit der Vorrichtung 1 fest verbunden ist. In der Vormontagestellung sind die Halteelemente 16 nicht vorgespannt. Die Bewegbarkeit der Halteelemente 16 ist aufgrund einer elastischen Verformung der Halteelemente 16 bzw. des Hintergreifteiles 8 möglich. Die Halteelemente 16 sind insofern auch Federelemente. In dem in Fig. 6 dargestellten Vormontagezustand sind der Abstand zwischen den Enden der Halteelemente 16 in einer Richtung parallel zu einer von der Trägerplatte 13 aufgespannten Ebene und parallel zu der Zeichenebene von Fig. 6 (Abstandsrichtung) größer als die lichte Breite A der Öffnung 10 bzw. Montageöffnung 10. Beim Einführen und Bewegen der Vorrichtung 1 in die Öffnung 10 und den Innenraum 17 werden aufgrund der keilförmigen Ausrichtung der beiden Halteelemente 16 die Halteelemente 16 um die Drehachse 25 verschwenkt, so dass sich das in Fig. 7 dargestellte rechte Halteelement 16 in einer Drehrichtung entgegen dem Uhrzeigersinn um die Drehachse 25 verschwenkt und das linke Halteelement 16 in einer Drehrichtung um die Drehachse 25 im Uhrzeigersinn bewegt. Dadurch werden die beiden Halteelemente 16 von der Vormontagestellung in die in Fig.7 dargestellte Eingreifstellung bewegt. In der Eingreifstellung gemäß Fig.7 ist der oben beschriebene Abstand zwischen den Enden der Halteelemente 16 kleiner als in der Vormontagestellung der Halteelemente 16. Beim weiteren Einführen der Vorrichtung 1 mit dem Vorsprung 15 in den Innenraum 17 wird der Kontakt zwischen den Enden der Halteelemente 16 bzw. den äußersten Schmalseitenflächen 27 und der Montageschiene 7 beendet, so dass aufgrund der elastischen Verformbarkeit der Halteelemente 16 sich die Halteelemente 16 in die Hintergreifstellung gemäß Fig. 8 bewegen oder schnappen. Es kommt somit zu einer Rückverformung der Halteelemente 16 von der Eingreifstellung gemäß Fig. 7 in die Hintergreifstellung gemäß Fig. 8.

In der Hintergreifstellung der Halteelemente 16 gemäß Fig. 8 liegen die Halteelemente 16 mit den Stirnkanten der oberen Breitseitenflächen 26 an der Tragschiene 6, insbesondere der Innenkontur 18 des Trägerteils 5 bzw. der Montageschiene 7, ab. Dadurch wird eine formschlüssige Verbindung zwischen der Vorrichtung 1 und dem Trägerteil 5 hergestellt.

Bei der Montage der Vorrichtung 1 auf dem Trägerteil 5 kann die Vorrichtung 1 zunächst auf die Tragschiene 6 aufgelegt werden. Der Abstand zwischen den Halteelementen 16 an den Enden ist größer als die lichte Breite A der Öffnung 10. Zum Bewegen der Vorrichtung 1 von dem Vormontagezustand gemäß Fig. 6 zu einer Stellung gemäß Fig. 7 beim Einführen der Vorrichtung 1 in die Öffnung 10 des Trägerteils 5 ist aufgrund der erforderlichen elastischen Verformung der Halteelemente 16 eine zusätzliche Kraft nach unten auf die Vorrichtung 1 aufzubringen, um die elastischen Kräfte der Halteelemente 16 zu überwinden. Das Gewicht der Vorrichtung 1 und des Anbauteiles 2 reicht hierzu nicht aus. Die elastischen Eigenschaften der Halteelemente 16 bzw. des Hintergreifteiles 8 sind hierzu entsprechend ausgelegt. Dadurch ist es möglich, die Vorrichtung 1 mit dem Anbauteil 3 vor dem Eindrücken des Vorsprunges 15 in die Öffnung 10 zur Erlangung der Hintergreifstellung die Vorrichtung 1 und das Anbauteil 2 auf der Montageschiene 7 in einer Richtung senkrecht zu der Zeichenebene der Fig. 6 bis 8 zu bewegen. Damit können bei der Montage beispielsweise von Fotovoltaik-Modulen 4 diese zunächst auf der Montageschiene 7 ausgerichtet werden, d. h. senkrecht zu der Zeichenebene von Fig. 6 bis 8 bewegt werden, und erst bei der Erlangung der endgültigen Montagestellung der Fotovoltaik-Module 4 können durch zusätzliches Eindrücken und Aufbringen einer Kraft nach unten gemäß der Darstellung in Fig. 6, 7 und 8 die Fotovoltaik-Module 4 endgültig an der Montageschiene 7 befestigt werden durch Überführen der Vorrichtung 1 in den Endmontagezustand gemäß Fig. 8.

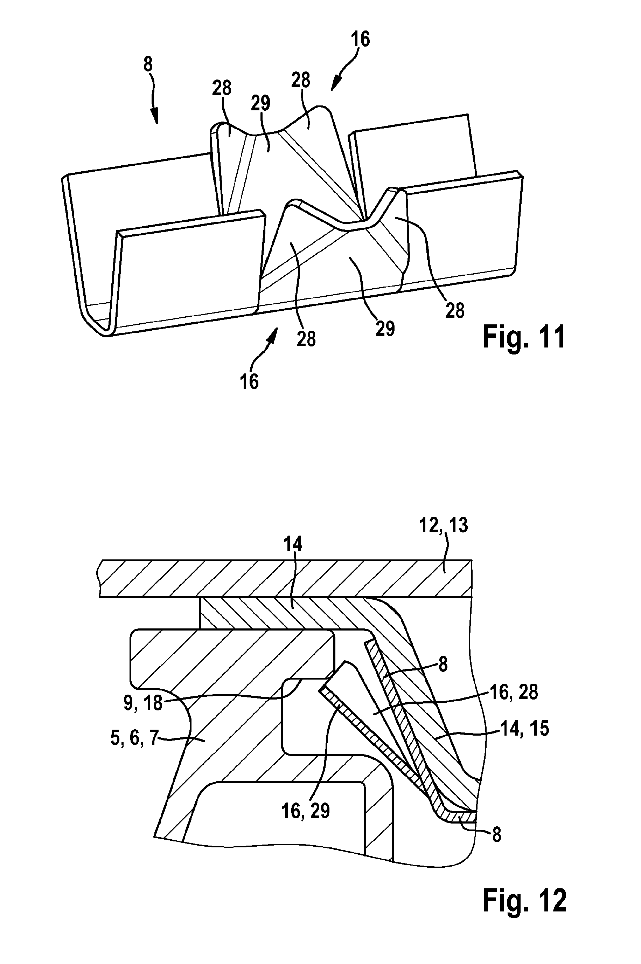

In Fig. 11 und 12 ist ein zweites Ausführungsbeispiel des Hintergreifteiles 8 abgebildet. Die Halteelemente 16 weisen jeweils zumindest ein Verkeilelement für eine Verkeilung mit der Tragschiene 6 auf. Bevorzugt weisen die Halteelemente 16 seitlich je zwei im Wesentlichen dreiecksförmige Abschrägungen 28 und dazwischen ein Mittelteil 29 auf. Die Beiden Abschrägungen 28 und das Mittelteil 29 sind einteilig und bilden ein Halteelement 16 mit einer anderen Geometrie als das Halteelement 16 des Hintergreifteiles 8 in dem oben beschriebenen ersten Ausführungsbeispiel. In der Endmontagestellung der Halteelemente 16 (Fig. 12) liegt die obere Schmalseitenfläche 26, welche von den beiden Abschrägungen 28 und dem Mittelteil 29 gebildet ist, der Halteelemente 16 an der Tragschiene 6 an. Die beiden Halteelemente 16 sind damit mit einer Keilwirkung an der Innenkontur 18 der Tragschiene eingespannt. Aufgrund der elastischen Verformbarkeit der Halteelemente 16 sind somit die Halteelemente 16 in der Hintergreifstellung vorgespannt. Damit ist die Vorrichtung 1 zusätzlich auch kraftschlüssig an dem Trägerteil 5 befestigt. Aufgrund der keilartigen Anordnung der Halteelemente 16 in dem Innenraum 17 kommt es bei Bewegungen der Tragschiene 6 nach unten, beispielsweise aufgrund von Setzungen, zu einer zusätzlichen Vorspannung zwischen der Vorrichtung 1 und dem Trägerteil 5, so dass dadurch derartige Bewegungen zu einer Mitbewegung der Vorrichtung 1 und damit auch des Anbauteiles 3 führen.

Insgesamt betrachtet sind mit der erfindungsgemäßen Vorrichtung 1 und dem erfindungsgemäßen System 2 wesentliche Vorteile verbunden. Das Befestigen von Anbauteilen 3 an Trägerteilen 5 erfolgt in konstruktiv einfacher Weise. Dadurch können Kosten bei der Herstellung der Vorrichtung 1 und des Systems 2 eingespart werden und aufgrund der fehlenden Vorspannung der Halteelemente 16 in der Vormontagestellung tritt keine unbeabsichtigte Bewegung der Halteelemente 16 auf. Im Vormontagezustand treten somit an der Vorrichtung 1 bei geringen auf die Vorrichtung 1 einwirkenden Kräften keine Schäden an der Vorrichtung 1 bzw. dem System 2 auf. Auch Setzungen oder Bewegungen des Trägerteils 5 können von dem System 2 teilweise oder ganz aufgenommen werden, indem die Vorrichtung 1 eine Bewegung des Trägerteiles 5 mit ausführt.

## Patentansprüche

1. Vorrichtung (1) zum Befestigen eines Anbauteiles (3, 4) an einem Trägerteil (5), umfassend
- wenigstens ein Hintergreifteil (8) zum Einführen in eine Öffnung (10) des Trägerteils (5) und zum Hintergreifen wenigstens eines Randes (9) des Trägerteiles (5) mit wenigstens einem bewegbaren Halteelement (16), welches oder welche beim Einführen in die Öffnung (10) aufgrund eines Kontaktes zwischen dem wenigstens einen Hintergreifteil (8) und dem Trägerteil (5) in eine Eingreifstellung bewegbar ist zum Einführen in die Öffnung (10) und mittels einer Rückbewegung des wenigstens einen Halteelementes (16) nach dem Einführen in die Öffnung (10) in eine Hintergreifstellung bewegbar ist, so dass der wenigstens eine Rand (9) des Trägerteils (5) von dem wenigstens einen Halteelement (16) hintergreifbar ist für eine formschlüssige Verbindung zwischen dem wenigstens einen Halteelement (16) und dem Trägerteil (5),
- wenigstens ein Mittel (12) zur Fixierung des Anbauteiles (3, 4) an der Vorrichtung (1),
**dadurch gekennzeichnet, dass**
das wenigstens eine Halteelement (16) in der Hintergreifstellung vollständig in einem von dem Trägerteil (5) eingeschlossenen Innenraum (17) angeordnet ist.

2. Vorrichtung nach Anspruch 1,
**dadurch gekennzeichnet, dass**
das wenigstens eine Hintergreifteil (8) wenigstens zwei Halteelemente (16) umfasst
und/oder
das wenigstens eine Halteelement (16) in der Hintergreifstellung, insbesondere ausschließlich, an einer Breitseitenfläche (26) und/oder an einer Schmalseitenfläche (27) des wenigstens einen Halteelementes (16) an dem Trägerteil (5) anliegt und/oder
je zwei Halteelemente (16) gegenüberliegend angeordnet sind.

3. Vorrichtung nach Anspruch 1 oder 2,
**dadurch gekennzeichnet, dass**
das wenigstens eine Halteelement (16), insbesondere ausschließlich, im Wesentlichen platten- oder scheibenförmig ausgebildet ist.

4. Vorrichtung nach einem oder mehreren der vorhergehenden Ansprüche,
**dadurch gekennzeichnet, dass**
das wenigstens eine Mittel (12) eine Trägerplatte (13) zur, vorzugsweise unmittelbaren, Fixierung der Vorrichtung (1) an dem Anbauteil (3, 4) umfasst.

5. Vorrichtung nach einem oder mehreren der vorhergehenden Ansprüche,
**dadurch gekennzeichnet, dass**
die Vorrichtung (1) wenigstens ein Eingreifteil (14) umfasst zum Einführen in die Öffnung (10) des Trägerteils (5).

6. Vorrichtung nach Anspruch 5,
**dadurch gekennzeichnet, dass**
die Geometrie des wenigstens einen Eingreifteiles (14) dahingehend an die Geometrie der Öffnung (10) des Trägerteils (5) angepasst ist, dass das wenigstens eine Eingreifteil (14) wenigstens teilweise in die Öffnung (10) einführbar ist.

7. Vorrichtung nach Anspruch 5 oder 6,
**dadurch gekennzeichnet, dass**
das wenigstens eine Eingreifteil (14) einen, vorzugsweise keilförmigen, Vorsprung (15) zur Einführung in die Öffnung (10) aufweist.

8. Vorrichtung nach einem oder mehreren der Ansprüche 5 bis 7,
**dadurch gekennzeichnet, dass**
das wenigstens eine Eingreifteil (14) zwischen dem wenigstens einen Hintergreifteil (8) und der Trägerplatte (13) angeordnet ist.

9. Vorrichtung nach einem oder mehreren der Ansprüche 4 bis 8,
**dadurch gekennzeichnet, dass**
die Trägerplatte (13) und/oder das wenigstens eine Eingreifteil (14) und/oder das wenigstens eine Hintergreifteil (8) einteilig oder mehrteilig ausgebildet sind.

10. Vorrichtung nach einem oder mehreren der vorhergehenden Ansprüche,
**dadurch gekennzeichnet, dass**
das wenigstens eine Halteelement (16) um eine Drehachse (25) verschwenkbar ist und/oder von dem wenigstens einen Halteelement (16) aufgrund einer Lagerung eine Translationsbewegung ausführbar ist
und/oder
das wenigstens eine Halteelement (16) bewegbar und rückbewegbar ist, da das wenigstens eine Halteelement (16) selbst elastisch verformbar ist und/oder das wenigstens eine Halteelement (16) mittels wenigstens eines separaten elastischen Elementes, insbesondere einer Feder, elastisch verformbar ist.

11. System (2) zum Befestigen eines Anbauteiles (3, 4) an einem
Trägerteil (5), umfassend
- eine Vorrichtung (1) zum Befestigen des Anbauteiles (3, 4) an dem Trägerteil (5), umfassend wenigstens ein Hintergreifteil (16) zum Einführen in eine Öffnung (10) des Trägerteiles (5) und zum Hintergreifen wenigstens eines Randes (9) des Trägerteiles (5) mit wenigstens einem bewegbaren Halteelement (16), welches oder welche beim Einführen in die Öffnung (10) aufgrund eines Kontaktes zwischen dem wenigstens einen Hintergreifteil (16) und dem Trägerteil (5) in eine Eingreifstellung bewegbar ist zum Einführen in die Öffnung (10) und mittels einer Rückbewegung des wenigstens einen Halteelementes (16) nach dem Einführen in die Öffnung (10) in eine Hintergreifstellung bewegbar ist, so dass der wenigstens eine Rand (9) des Trägerteils (5) von dem wenigstens einen Halteelement (16) hintergreifbar ist für eine formschlüssige Verbindung zwischen dem wenigstens einen Halteelement (16) und dem Trägerteil (5), wenigstens ein Mittel (12) zur Fixierung des Anbauteiles (3, 4) an der Vorrichtung (1),
- das Trägerteil (5),
**dadurch gekennzeichnet, dass**
die Vorrichtung (1) gemäß einem oder mehrerer der vorhergehenden Ansprüche ausgebildet ist.

12. System nach Anspruch 11,
**dadurch gekennzeichnet, dass**
das Trägerteil (5) eine Tragschiene (6) ist und/oder die Öffnung (10) vorzugsweise eine Nut (11)
und/oder
die Öffnung (10) in einen von einer Innenkontur (18) des Trägerteils (5) begrenzten Innenraum (17) mündet, so dass der wenigstens eine Rand (9) zum Hintergreifen mit dem wenigstens einen Haltelement (16) von der Innenkontur (18) des Trägerteils (5) gebildet ist.

13. System nach Anspruch 12,
**dadurch gekennzeichnet, dass**
zwei gegenüberliegende Halteelemente (16) bei einer Befestigung der Vorrichtung (1) an dem Trägerteil (5) bezüglich einer durch eine zentrische Schienenlängsachse (19) der Tragschiene (6) verlaufenden Ebene (20) dahingehend ausgerichtet sind, dass die Ebene (20) durch die beiden Halteelemente (16) verläuft und die Ebene (20) von der zentrischen Schienenlängsachse (19) in eine erste Teilebene (21) und eine zweite Teilebene (22) unterteilt ist und ein erstes Halteelement (16, 23) von der ersten Teilebene (21) geschnitten ist und ein zweites Halteelement 16, (24) von der zweiten Teilebene (22) geschnitten ist.

14. System nach einem oder mehreren der Ansprüche 11 bis 13,
**dadurch gekennzeichnet, dass**
die wenigstens zwei Halteelemente (16) um eine Drehachse (25) im Wesentlichen parallel zu der Schienenlängsachse (19) verschwenkbar sind oder die Drehachse (25) in einem, vorzugsweise rechten, Winkel zu der Schienenlängsachse (19) ausgerichtet ist und/oder
der Abstand von Enden zweier gegenüberliegender Halteelemente (16) in einer Abstandsrichtung vor dem Einführen in die Öffnung (10) größer ist als eine lichte Breite (A) der Öffnung (10) in der Abstandsrichtung, so dass beim Einführen der zwei gegenüberliegenden Haltelemente (16) die Halteelemente (16) wegen eines Kontaktes mit dem Trägerteil (5) bewegbar sind.

15. System nach einem oder mehreren der Ansprüche 11 bis 14,
**dadurch gekennzeichnet, dass**
bei einer Befestigung der Vorrichtung (1) an dem Trägerteil (5) das wenigstens eine Halteelement (16) in der Hintergreifstellung an dem Trägerteil (5) vorgespannt ist
und/oder
die Befestigung der Vorrichtung (1) an dem Trägerteil (5) eine unlösbare Verbindung ist.
